# EUROPEAN PATENT SPECIFICATION

(11) **EP 0 432 463 B1**
(45) Date of publication and mention of the grant of the patent: **22.01.1997**
(21) Application number: 90121495.7
(22) Date of filing: 09.11.1990
(51) Int. Cl.: G06F 13/368

(54) **Distributed fair arbitration scheme for providing access to a data communication bus**
Verteiltes, unparteiisches Arbitrierungsschema für Zugriff auf einen Datenübertragungsbus
Système d'arbitrage distribué équitable pour accès à un bus de communication de données

(30) Priority: 13.11.1989 US 436144
(43) Date of publication of application: 19.06.1991
(73) Proprietor: Hewlett-Packard Company, Palo Alto, California 94304 (US)
(72) Inventor: Wille, Ross M., Sunnyvale, California 94086 (US); Carter, Richard J., Palo Alto, California 94303 (US)
(74) Representative: Baillie, Iain Cameron

(56) References cited:
- EP-A- 0 076 401
- ELEKTRONIK, vol. 29, no. 8, April 1980, pages 65-68, Munich, DE; G. FÄRBER: "Ein dezentralisierter fairer Bus-Arbiter"
- CONTROL ENGINEERING, vol. 27, no. 9, September 1980, pages 129-132, St. Pontiac, ILL, US; M.J. McGOWAN: "Process bus protocol orchestrates distributed or centalized control"

## Description

### Background

The present invention concerns the use of a distributed priority list in order to implement a distributed fair arbitration scheme for providing agents with access to a data communication bus. An agent is a module on a bus which can master transactions.

When many agents simultaneously seek access to a bus, some type of arbitration scheme needs to be used to determine which agent may use the bus for its data transaction. In the prior art a number of schemes have been used. For example, in parallel contention schemes each agent is assigned an arbitration number which determines its access priority to the bus. In Round Robin Schemes there is a dynamic assignment of arbitration numbers and thus access priority to the bus is dynamic. In First-Come First-Served schemes there is an attempt to award an agent access to the bus in the order that the agents request access. In all these schemes there is an attempt to provide agents fair access to the bus with minimal overhead or implementation cost.

A technical article by Georg Färber entitled "Ein dezentralisierter fairer Bus-Arbiter" (Elektronik, Vol. 29, No. 8, 1980) shows a proposed distributed arbiter system in which each processor must decide for itself whether it can be the next bus master or not.

### Summary of the Invention

A solution according to the invention is achieved by a method according to Claim 1 and an arrangement according to Claim 4.

In accordance with the preferred embodiment of the present invention a method for arbitrating access by a plurality of agents to a bus is presented. A priority access list is maintained. Each agent in the plurality of agents has a position on the priority access list. This position indicates the agent's relative priority level of access to the bus. When more than one agent from the plurality of agents requests access to the bus, bus access is granted to the requesting agent which is higher on the priority access list than all other requesting agents. Once an agent from the plurality of agents has gained access to the bus, the agent which gained access to the bus is moved to the bottom of the priority access list.

In the preferred embodiment, the priority access list is distributed among the plurality of agents. Each agent includes a higher priority register. At initialization each agent is given an initial position on the priority access list. This is done by initializing each agent's higher priority register. Within each agent, the higher priority register is initialized. For example, a first higher priority register in a first agent is initialized. For every agent higher on the priority access list than the first agent a corresponding bit in the first higher priority register is set to logic 1. For every agent lower on the higher priority register than the first agent a corresponding bit in the first higher priority register is set to logic 0.

Once initialized, the order of agents on the priority access list is changed after an agent gains access to the bus. When an agent gains access to the bus, the agent is moved to the bottom of the priority access list That is, the agent which gained access to the bus sets to logic 1 every bit in its higher priority register. Likewise, within every agent not gaining access to the bus, the bit within the higher priority register corresponding to the agent gaining access is set to logic 0.

The present invention is an improvement over the prior art in that it is an inexpensive and efficient implementation of a fair arbitration scheme. What is meant by a fair arbitration scheme is an arbitration scheme in which when more than one agent requests access to the bus, the requesting agent which least recently used the bus will be the agent that gains access to the bus.

### Brief Description of the Drawings

Figure 1 shows agents connected to a bus in accordance with the preferred embodiment of the present invention.

Figure 2 shows hardware logic which implements a distributed fair arbitration scheme for a single agent in accordance with the preferred embodiment of the present invention.

### Description of the Preferred Embodiment

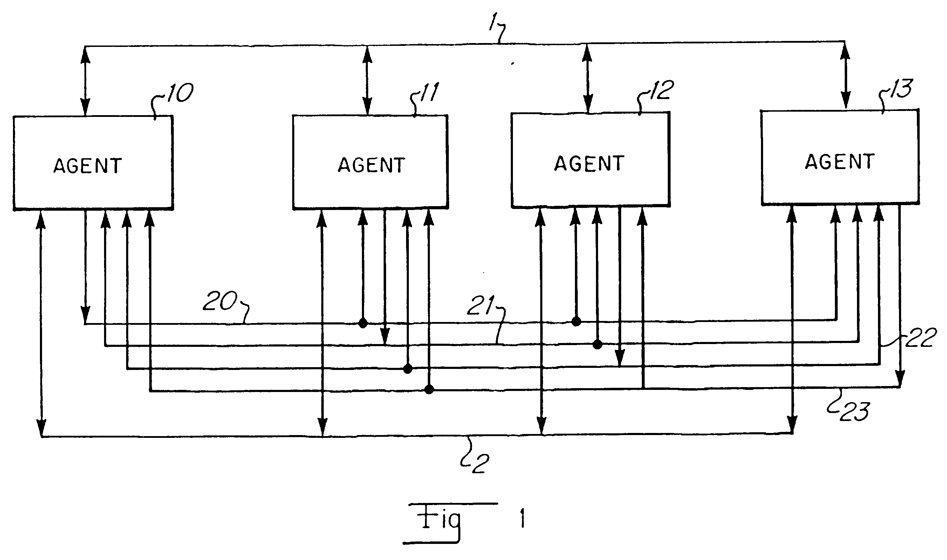

In Figure 1 an agent 10, an agent 11, an agent 12 and an agent 13 are shown connected to a bus 1. When any of agents 10, 11, 12 and 13 request access to bus 1 for a data transfer, an arbitration scheme is used to determine who can have control of bus 1. In the present distributed arbitration scheme, when agent 10 desires to access bus 1, agent 10 drives to logic 1 a line 20. When agent 11 desires to access bus 1, agent 11 drives to logic 1 a line 21. When agent 12 desires to access bus 1, agent 12 drives to logic 1 a line 22. When agent 13 desires to access bus 1, agent 13 drives to logic 1 a line 23.

When one of agents 10, 11, 12 and 13 is awarded access to bus 1, the agent receiving access identifies itself over lines 2. For example, if agent 10 gains access to bus 1, agent 10 will drive to logic 0 both of lines 2. If agent 11 gains access to bus 1, agent 11 will drive to logic 0 a first of lines 2 and drive a second of lines 2 to logic 1. If agent 12 gains access to bus 1, agent 12 will drive the first of lines to logic 1 and drive to logic 0 the second of lines 2. If agent 13 gains access to bus 1, agent 13 will drive both of lines 2 to logic 1.

Although in Figure 1 lines 2, 20, 21, 22 and 23 are logically separate from bus 1 and are shown separate from bus 1; nevertheless, the lines of bus 1 may be time shared so that lines 2, 20, 21, 22 and 23 may be implemented by the same lines of bus 1 that transfer data.

In order to allow fair arbitration of bus access for each of agents 10, 11, 12 and 13, a distributed priority list is maintained by the agents. The distributed priority list is used to decide which agent may have access to bus 1. An agent at the top of the priority list has the highest priority to access bus 1. The agent next on the list has the next highest priority, and so on. The agent at the bottom of the priority list has the lowest priority

When bus 1 is free, each of agents 10, 11, 12 and 13 which desires to access bus 1 will respectively drive one of lines 20, 21, 22, or 23 to logic 1, as described above. Of agents 10, 11, 12 and 13 which drive to logic 1 one of lines 20, 21, 22 or 23, the agent with the highest priority receives access to bus 1. The agent receiving access will identify itself on lines 2. The agent that received access to bus 1 gets moved to the bottom of the distributed priority list. This agent becomes the lowest priority agent for the next arbitration.

The information provided agents 10, 11, 12 and 13 over lines 2, 20, 21, 22 and 23 is enough to implement the distributed priority list access method. Each of agents 10, 11, 12 and 13 maintain a higher priority register. For each agent, its higher priority register contains one bit for every other agent. Thus a higher priority register for agent 10 will contain a bit for agent 11, a bit for agent 12 and a bit for agent 13. A higher priority register for agent 11 will contain a bit for agent 10, a bit for agent 12 and a bit for agent 13. A higher priority register for agent 12 will contain a bit for agent 10, a bit for agent 11 and a bit for agent 13. A higher priority register for agent 13 will contain a bit for agent 10, a bit for agent 11 and a bit for agent 12.

If a first of agents 10, 11, 12 and 13 has a lower priority than a second of agents 10, 11, 12 and 13, the bit within the higher priority register of the first of agents 10, 11, 12 and 13 which corresponds to the second of agents 10, 11, 12 and 13 will be set to logic 1. If the first of agents 10, 11, 12 and 13 has a higher priority than the second of agents 10, 11, 12 and 13, the bit within the higher priority register of the first of agents 10, 11, 12 and 13 which corresponds to the second of agents 10, 11, 12 and 13 will be set to logic 0.

For example, if agent 10 has the highest priority, all the bits in its higher priority register will be set to logic 0. If agent 11 has the second highest priority, the bit within its higher priority register which corresponds to agent 10 will be set to logic 1. All other bits within the higher priority register of agent 11 will be set to logic 0. If agent 12 has the third highest priority, the bits within its higher priority register which correspond to agent 10 and agent 11 will be set to logic 1. The bit within the higher priority register of agent 12 which corresponds to agent 13 will be set to logic 0. Agent 13 will then have the lowest priority and all the bits in the higher priority register of agent 13 will be set to logic 1.

An agent with a higher priority register which contains all logic 0s has the highest priority to access bus 1. An agent with a higher priority register which contains only one logic 1 has the second highest priority. An agent with a higher priority register which contains two logic 1s has the third highest priority. An agent with a higher priority register which contains all logic 1s has the lowest priority.

Table 1 below shows the contents of the higher priority registers for each of agents 10, 11, 12 and 13. In Table 1 and in the following tables, for the contents of each higher priority register, the leftmost bit represents the relative priority of agent 10, the second leftmost bit represents the relative priority of agent 11, the third leftmost bit represents the relative priority of agent 12 and the rightmost bit represents the relative priority of agent 13. An "X" refers to a register bit which has been deleted or is nullified.

**Table 1**

| Agent 10 | Agent 11 | Agent 12 | Agent 13 |
|---|---|---|---|
| X 0 0 0 | 1 X 0 0 | 1 1 X 0 | 1 1 1 X |

For example, at the first arbitration time agent 11 drives to logic 1 line 21 indicating agent 11 wants to access bus 1. simultaneously, agent 13 drives to logic 1 line 23 indicating agent 13 also wants to access bus 1. Agent 10 and agent 12 do not want to access bus 1 at this time so lines 20 and lines 22 remain at logic 0. Each of agents 10, 11, 12 and 13 see values for lines 20, 21, 22 and 23 as shown in Table 2 below.

**Table 2**

| Line 20 | Line 21 | Line 22 | Line 23 |
|---|---|---|---|
| 0 | 1 | 0 | 1 |

Agent 13 will note that line 21 is driven to logic 1 indicating that agent 11 desires to access bus 1. Since the bit for agent 11 within the higher priority register of agent 13 is set to logic 1, agent 13 knows that it does not have high enough priority to access bus 1. Simultaneously agent 11, will note that line 23 is driven to logic 1 indicating that agent 13 desires to access bus 1. However, the bit for agent 13 within the higher priority register of agent 11 is set to logic 0, indicating that agent 11 has a higher priority than agent 13. Agent 11 thus realizes it has been granted access to bus 1. Agent 11 will then perform its desired bus transaction and will identify itself as the agent who accessed the bus by driving the logic value "01" on lines 2. Each of agents 10, 12 and 13 will then set to logic 0 the bit in their higher priority register for agent 11. Likewise, agent 11 will set to logic 1 the bits in its higher priority register. In this way agent 11 is moved to the bottom of the distributed priority list. Now, agent 10 will still have the highest priority, but agent 12 will have the second highest priority and agent 13 will have the third highest priority.

Table 3 below shows the contents of the higher priority registers for each of agents 10, 11, 12 and 13.

**Table 3**

| Agent 10 | Agent 11 | Agent 12 | Agent 13 |
|---|---|---|---|
| X 0 0 0 | 1 X 1 1 | 1 0 X 0 | 1 0 1 X |

Now, if agent 11 drives to logic 1 line 21 indicating agent 11 wants to access bus 1, and simultaneously, agent 13 drives to logic 1 line 23 indicating agent 13 also wants to access bus 1, a different result will occur. Suppose again agent 10 and agent 12 do not want to access bus 1, then lines 20 and lines 22 remain at logic 0. Each of agents 10, 11, 12 and 13 see values for lines 20, 21, 22 and 23 as shown in Table 4 below.

**Table 4**

| Line 20 | Line 21 | Line 22 | Line 23 |
|---|---|---|---|
| 0 | 1 | 0 | 1 |

Agent 11 will note that line 23 is driven to logic 1 indicating that agent 13 desires to access bus 1. Since the bit for agent 13 within the higher priority register of agent 11 is set to logic 1, agent 11 knows that it does not have high enough priority to access bus 1. Simultaneously agent 13, will note that line 21 is driven to logic 1 indicating that agent 11 desires to access bus 1. However, the bit for agent 11 within the higher priority register of agent 13 is set to logic 0, indicating that agent 13 has a higher priority than agent 11. Agent 13 thus realizes it has been grated accesss to bus 1. Agent 13 will then perform its desired bus transaction and will identify itself as the agent who accessed the bus by driving the logic value "11" on lines 2. Each of agents 10, 11 and 12 will then set to logic 0 the bit in their higher priority register for agent 13. Likewise, agent 13 will set to logic 1 the bits in its higher priority register. In this way agent 13 is moved to the bottom of the distributed priority list. Now, agent 10 will still have the highest priority and agent 12 will have the second highest priority, but agent 11 will have the third highest priority.

Table 5 below shows the contents of the higher priority registers for each of agents 10, 11, 12 and 13.

**Table 5**

| Agent 10 | Agent 11 | Agent 12 | Agent 13 |
|---|---|---|---|
| X 0 0 0 | 1 X 1 0 | 1 0 X 0 | 1 1 1 X |

Now, for example, if agent 10 drives to logic 1 line 20 indicating agent 10 wants to access bus 1, and lines 21, 22, and 23 remain at logic 0 because agents 11, 12 and 13 do not want to access bus 1, then each of agents 10, 11, 12 and 13 see values for lines 20, 21, 22 and 23 as shown in Table 4 below.

**Table 6**

| Line 20 | Line 21 | Line 22 | Line 23 |
|---|---|---|---|
| 1 | 0 | 0 | 0 |

Agent 10 will note that none of lines 21, 22 and 23 are driven to logic 1. Therefore, agent 10 realizes it has been granted access to bus 1. Agent 10 will then perform its desired bus transaction and will identify itself as the agent who accessed the bus by driving the logic value "00" on lines 2. Each of agents 11, 12 and 13 will then set to logic 0 the bit in their higher priority register for agent 10. Likewise, agent 10 will set to logic 1 the bits in its higher priority register. In this way agent 10 is moved to the bottom of the distributed priority list. Now, agent 12 will have the highest priority, agent 11 will have the second highest priority, and agent 13 will have the third highest priority.

Table 7 below shows the contents of the higher priority registers for each of agents 10, 11, 12 and 13.

**Table 7**

| Agent 10 | Agent 11 | Agent 12 | Agent 13 |
|---|---|---|---|
| X 1 1 1 | 0 X 1 0 | 0 0 X 0 | 0 1 1 X |

Now, for example, suppose agent 10 drives to logic 1 line 20 indicating agent 10 wants to access bus 1, agent 11 drives to logic 1 line 21 indicating agent 11 wants to access bus 1, and agent 13 drives to logic 1 line 23 indicating agent 13 wants to access bus 1. Line 22 remains at logic 0 indicating agent 12 does not want to access bus 1. Each of agents 10, 11, 12 and 13 sees values for lines 20, 21, 22 and 23 as shown in Table 8 below.

**Table 8**

| Line 20 | Line 21 | Line 22 | Line 23 |
|---|---|---|---|
| 1 | 1 | 0 | 1 |

Agent 10 will note that line 21 and line 23 are driven to logic 1 indicating that agent 11 and agent 13 desire to access bus 1. Since both the bits for agent 11 and agent 13 within the higher priority register of agent 10 are set to logic 1, agent 10 knows that it does not have high enough priority to access bus 1. Likewise, Agent 13 will note that line 20 and line 21 are driven to logic 1 indicating that agent 10 and agent 11 desire to access bus 1. since the bit for agent 11 within the higher priority register of agent 13 is set to logic 1, agent 13 knows that it does not have high enough priority to access bus 1. Agent 11, will note that line 20 and line 23 are driven to logic 1 indicating that agent 10 and agent 13 desire to access bus 1. However, the bits for agent 10 and agent 13 within the higher priority register of agent 11 are set to logic 0, indicating that agent 11 has a higher priority than either agent 10 or agent 13. Agent 11 thus realizes it has been granted access to bus 1. Agent 11 will then perform its desired bus transaction and will identify itself as the agent who accessed the bus by driving the logic value "01" on lines 2. Each of agents 10, 12 and 13 will then set to logic 0 the bit in their higher priority register for agent 11. Likewise, agent 11 will set to logic 1 the bits in its higher priority register. In this way agent 11 is moved to the bottom of the distributed priority list. Now, agent 12 will still have the highest priority, but agent 13 will have the second highest priority and agent 10 will have the third highest priority.

Table 9 below shows the contents of the higher priority registers for each of agents 10, 11, 12 and 13.

**Table 9**

| Agent 10 | Agent 11 | Agent 12 | Agent 13 |
|---|---|---|---|
| X 0 1 1 | 1 X 1 1 | 0 0 X 0 | 0 0 1 X |

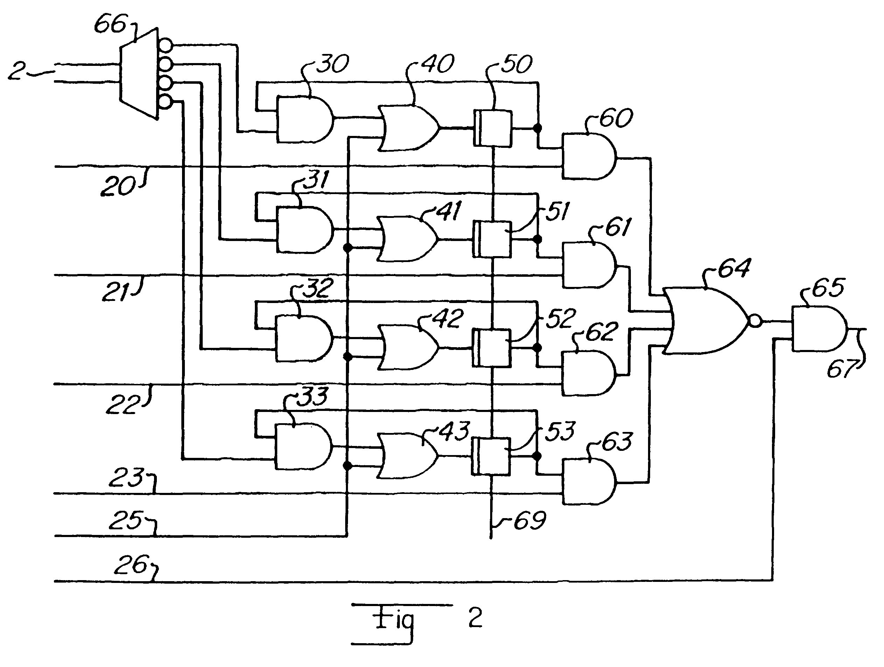

Figure 2 shows hardware logic which implements the distributed priority list for residing in each of agents 10, 11, 12 and 13. The hardware logic includes a bit register 50, a bit register 51, a bit register 52 and a bit register 53. Registers 50 - 53 are used as the higher priority register. Bit register 50 is the bit in the higher priority register for agent 10. Bit register 51 is the bit in the higher priority register for agent 11. Bit register 52 is the bit in the higher priority register for agent 12. Bit register 53 is the bit in the higher priority register for agent 13.

The hardware logic also includes a logical "AND" gate 30, a logical "AND" gate 31, a logical "AND" gate 32, a logical "AND" gate 33, a logical "AND" gate 60, a logical "AND" gate 61, a logical "AND" gate 62, a logical "AND" gate 63, a logical "AND" gate 65, a logical "OR" gate 40, a logical "OR" gate 41, a logical "OR" gate 42, a logical "OR" gate 43, a logical "NOR" gate 64 and a decoder 66 connected as shown.

The logic shown in Figure 2 is generic for all the agents. However, when implemented in each agent the hardware logic shown in Figure 2 includes redundant logic which must be eliminated or nullified. For example, for agent 10, logical "AND" gate 30, logical "OR" gate 40, bit register 50 and logical "AND" gate 60 should be either removed or nullified. When the logic is removed, logic "NOR" gate is reduced to three inputs. The logic may be nullified, for example, by replacing line 20 with a line connected to logic 0. similarly, for agent 11, logical "AND" gate 31, logical "OR" gate 41, bit register 51 and logical "AND" gate 61 should be either removed or nullified. The logic may be nullified, for example, by replacing line 21 with a line connected to logic 0. For agent 12, logical "AND" gate 32, logical "OR" gate 42, bit register 52 and logical "AND" gate 62 should be either removed or nullified. The logic may be nullified, for example, by replacing line 22 with a line connected to logic 0. For agent 13, logical "AND" gate 33, logical "OR" gate 43, bit register 53 and logical "AND" gate 63 should be either removed or nullified. The logic may be nullified, for example, by replacing line 23 with a line connected to logic 0.

When an agent desires access to the bus it will drive to logic 1 its own line 26. If the result is that line 67 is driven to logic 1, this indicates to the agent that it has access to bus 1. Line 67 will be driven to logic 1 when none of the other agents with higher priority desire bus 1. If line 67 remains at logic 0, then the agent knows that it did not gain access to bus 1.

When the agent gains access to bus 1, a line 25 is driven to logic 1. This sets to logic 1 the bits in registers 50-53 for all the other agents. When another agent gains access to bus 1, the agent receiving access is identified by lines 2. Decoder 66 decodes lines 2 and causes to be driven to logic 0 the input of the register from registers 50-53 for the agent that gains access to bus 1. A clock input 69 clocks registers 50-53 setting registers 50-53 to the values at the input of each of the respective registers.

Once an agent receives all of the arbitration request signals from the other agents, it takes approximately two gate delays to determine if it won arbitration. This means an agent can determine whether or not it won arbitration in approximately one bus propagation time plus two gate delays.

While this description has presented an example of four agents accessing a bus, the distributed priority list arbitration method can be used to arbitrate any number N agents (numbered 0 through N-1). The cost to each agent of implementing the arbitration method is directly proportional to N.

The distributed priority list arbitration method guarantees that each agent will gain access to the bus within N-1 transaction times in the worst case of every agent continuously requesting access to the bus. The wait will be less than N-1 if the bus is not saturated, or if the agent has not requested the bus for some period of time. This is because if an agent does not request the bus for a long time, the agent rises to the top of the list as other agents gain access to the bus and are placed at the bottom of the list. When the agent finally requests the bus, it will have a very high priority, ensuring that it will quickly gain access to the bus.

All agents must be initialized to a consistent state before bus 1 is accessed. A simple initialization strategy is to initialize each higher priority register to a value based on the statically-assigned slot number of the agent on the bus. For example, the agent in the first slot would have the highest priority, the agent in the second slot would have the second highest priority, etc.

## Claims

1. A method in a computing system for arbitrating access to a bus (1) by a plurality of agents (10, 11, 12, 13), the method comprising the steps of:
(a) maintaining a distributed priority access list in which each agent (10, 11, 12, 13) in the plurality of agents has a higher priority register (50, 51, 52, 53) which indicates the agent's relative priority level for obtaining access to the bus,
(b) when more than one agent from the plurality of agents requests access to the bus, granting bus access to an agent from among the agents requesting access which is highest on the distributed priority access list, with the substep of
(b.1) signaling, by each agent requesting access to the bus, a request on a plurality of request lines lines (20,21,22,23), the plurality of request lines being coupled to each of the plurality of agents, and
(c) once an agent from the plurality of agents has gained access to the bus, modifying each high priority register to move the agent which gained access to the bottom of the distributed priority access list,
characterized in that when more than one agent from the plurality of agents requests access to the bus, the granting of bus access to an agent from among the agents requesting access which is highest on the distributed priority access list includes the further substeps of:
(b.2) signaling on grant lines (2), by the agent from among the agents requesting access which is highest on the distributed priority access list, the identity of the agent from among the agents requesting access which is highest on the distributed priority access list, the grant lines being coupled to each of the plurality of agents and being separate from the request lines.

2. A method as in claim 1 wherein in step (b.2) the signaling on the grant lines is accomplished by placing on the grant lines an encoded value which represents the identity of the agent from among the agents requesting access which is highest on the distributed priority access list.

3. A method as in claim 1 wherein step (c) includes the substeps of:
(c1) for the agent gaining access to the bus, setting to a first logic value all bits within the higher priority register of the agent gaining access to the bus; and,
(c2) for agents in the plurality of agents not gaining access to the bus, setting to a second logic value a bit within the agent's higher priority register, the bit set to the second logic value corresponding to the agent which did gain access to the bus.

4. A network system comprising:
(a) a bus (1);
(b) a plurality of agents (10, 11, 12, 13), coupled to the bus;
(c) distributed list means comprising a higher priority register, within each of the plurality of agents, for maintaining a distributed priority access list in which each agent in the plurality of agents has a position on the distributed priority access list which indicates each agent's relative priority level of access to the bus;
(d) arbitration means (20-67), within each of the plurality of agents, for, upon at least one agent from the plurality of agents requesting access to the bus, granting bus access to an agent from among the at least one agent requesting access to the bus which is highest on the distributed priority access list, said arbitration means including
(d1) a plurality of request lines(20, 21, 22, 23), the plurality of request lines being coupled to each agent in the plurality of agents, each of the plurality of agents requesting access to the bus by placing a signal on a request line from the plurality of request lines, and
(e) list maintenance means (30-33,40-43,66), within each of the plurality of agents and coupled to the distributed list means, for moving an agent to a bottom of the distributed priority access list once the agent has gained access to the bus,
characterized in that the arbitration means further includes:
(d2) grant lines (2), separate from the plurality of request lines and coupled to each agent of the plurality of agents, a value on the grant lines identifying an agent which gains access to the bus.

5. A network system as in claim 4 wherein the distributed list means includes within each agent from the plurality of agents:
(c1) a higher priority register (50, 51, 52, 53), the higher priority register including a bit for every agent from the plurality of agents except for an agent containing the higher priority register, bits within the higher priority register being set to a first logic value for every agent from the plurality of agents which has a position higher on the distributed priority access list than the agent containing the higher priority register, and bits within the higher priority register being set to a second logic value for every agent from the plurality of agents which as a position lower on the distributed priority access list than the agent containing the higher priority register.

6. A network system as in claim 5 wherein the list maintenance means includes within each agent from the plurality of agents:
(e1) setting means (25, 69) , coupled to the higher priority register, for setting all bits to the first logic value within the higher priority register upon the agent containing the higher priority register gaining access to the bus; and,
(e2) clearing means (2, 30, 31, 32, 33, 66, 69), coupled to the higher priority register, for setting to the second logic value a bit within the higher priority register for an agent which gains access to the bus when the agent which gains access to the bus is not the agent containing the higher priority register.

7. A network system as in claim 6 wherein the setting means includes within each agent from the plurality of agents,
(e1.1) a register set line (25), the register set line logically coupled to all bits in the higher priority register, the register set line within a particular agent being driven to logic 1 when the particular agent gains access to the bus.

8. A network system as in claim 7 wherein the clearing means includes within each agent from the plurality of agents:
(e2.1) a plurality of logical "OR" gates (40,41,42,43), an output of each logical "OR" gate being coupled to a bit in the higher priority register and an input of each logical "OR" gate being coupled to the register set line;
(e2.2) a plurality of logical "AND" gates (30,31 32, 33), an output of each logical "AND" gate being coupled to a logical "OR" gate from the plurality of logical "OR" gates, and a first input of each logical "AND" gate coupled to a bit in the higher priority register; and,
(e2.3) decoding means (66), coupled to the grant lines (2), and coupled to a second input of each of the plurality of logical "AND" gates, for decoding the value on the grant lines and for driving on a second input of one of the plurality of logical "AND" gates a logic 0 for an agent which the value on the grant lines identifies as the agent which gains access to the bus.

9. A network system as in claim 5 wherein the arbitration means includes for each agent from the plurality of agents:
(d3) a plurality of access lines , coupled to the plurality of request lines, one access line in the plurality of access lines being driven to logic 1 when one agent in the plurality of agents desires to access the bus;
(d4) a plurality of "AND" gates (60, 61, 62, 63, 65), one "AND" gate for every agent in the plurality of agents, each "AND" gate from the plurality of "AND" gates having an output, a first input and a second input, the first input being coupled to an access line, the output for a first "AND" gate (65) in the plurality of "AND" gates for a first agent which contains the arbitration means being driven to logic 1 when the first agent has access to the bus, and the second input for every agent in the plurality of agents except the first agent being coupled to a bit within the higher priority register, and
(d5) a "NOR" gate (64), having an output and a plurality of inputs, the output of the "NOR" gate being coupled to a second input of the first "AND" gate, and each input being coupled to an output of an "AND" gate from the plurality of "AND" gates except the first "AND" gate.

10. A network system as in claim 5 wherein the value on the grant lines is encoded.

## Patentansprüche

1. Ein Verfahren in einem Computersystem zum Entscheiden eines Zugriffs auf einen Bus (1) von einer Mehrzahl von Agenten (10, 11, 12, 13), mit folgenden Schritten:
(a) Halten einer verteilten Prioritätszugriffsliste, in der jeder Agent (10, 11, 12, 13) in der Mehrzahl von Agenten ein höheres Prioritätsregister (50, 51, 52, 53) aufweist, welches die relative Prioritätsebene des Agenten zum Erhalten eines Zugriffs auf den Bus anzeigt;
(b) wenn mehr als ein Agent aus der Mehrzahl von Agenten einen Zugriff auf den Bus anfordert, Erteilen eines Buszugriffes einem Agenten unter den Agenten, die einen Zugriff anfordern, welcher der höchste auf der verteilten Prioritätszugriffsliste ist, mit dem Teilschritt (b.1) des Signalisierens von jedem Agenten, der einen Zugriff auf den Bus anfordert, einer Anforderung auf einer Mehrzahl von Anforderungsleitungen (20, 21, 22, 23), wobei die Mehrzahl von Anforderungsleitungen mit jedem der Mehrzahl von Agenten gekoppelt ist; und
(c) sobald ein Agent aus der Mehrzahl von Agenten einen Zugriff auf den Bus erhalten hat, Modifizieren jedes hohen Prioritätsregisters, um den Agenten, welcher einen Zugriff erhalten hatte, zu dem hinteren Ende der verteilten Prioritätszugriffsliste zu bewegen;
dadurch gekennzeichnet, daß, wenn mehr als ein Agent aus der Mehrzahl von Agenten einen Zugriff auf den Bus anfordert, das Erteilen des Buszugriffes für einen Agenten unter den Agenten, die einen Zugriff anfordern, welcher auf der verteilten Prioritätszugriffsliste der höchste ist, den folgenden weiteren Teilschritt aufweist:
(b.2) Signalisieren auf Erteilungsleitungen (2) durch den Agent unter den Agenten, die einen Zugriff anfordern, welcher der höchste in der verteilten Prioritätszugriffsliste ist, die Identität des Agenten unter den Agenten, die einen Zugriff anfordern, welcher auf der verteilten Prioritätszugriffsliste der höchste ist, wobei die Erteilungsleitungen mit jedem der Mehrzahl von Agenten gekoppelt und von den Anforderungsleitungen getrennt sind.

2. Ein Verfahren gemäß Anspruch 1, bei dem in dem Schritt (b.2) das Signalisieren auf den Erteilungsleitungen erreicht wird, indem auf den Erteilungsleitungen ein codierter Wert plaziert wird, welcher die Identität des Agenten unter den Agenten, die einen Zugriff anfordern, welcher der höchste auf der erteilten Prioritätszugriffsliste ist, darstellt.

3. Ein Verfahren gemäß Anspruch 1, bei dem der Schritt (c) folgende Teilschritte aufweist:
(c1) für den Agenten, der einen Zugriff auf den Bus erhält, Einstellen aller Bits innerhalb des höheren Prioritätsregisters des Agenten, der einen Zugriff auf den Bus erhält, auf einen ersten logischen Wert; und
(c2) für alle Agenten in der Mehrzahl von Agenten, die keinen Zugriff auf den Bus erhalten, Einstellen eines Bit innerhalb des höheren Prioritätsregisters des Agenten auf einen zweiten logischen Wert, wobei das Bit, das auf den zweiten logischen Wert eingestellt ist, dem Agenten entspricht, der einen Zugriff auf den Bus erhielt.

4. Ein Netzsystem mit folgenden Merkmalen:
(a) einem Bus (1);
(b) einer Mehrzahl von Agenten (10, 11, 12, 13), die mit dem Bus gekoppelt sind;
(c) einer verteilten Listeneinrichtung, die ein höheres Prioritätsregister aufweist, innerhalb jedes der Mehrzahl von Agenten, zum Halten einer verteilten Prioritätszugriffsliste, in der jeder Agent in der Mehrzahl von Agenten eine Position in der verteilten Prioritätszugriffsliste aufweist, welche die relative Prioritätsebene jedes Agenten für einen Zugriff auf den Bus anzeigt;
(d) einer Entscheidungseinrichtung (20 - 67) innerhalb jedes der Mehrzahl von Agenten, um, wenn zumindest ein Agent aus der Mehrzahl von Agenten einen Zugriff auf den Bus anfordert, einen Buszugriff einem Agenten unter dem zumindest einen Agenten, der einen Zugriff auf den Bus anfordert, zu erteilen, welcher auf der verteilten Prioritätszugriffsliste am höchsten ist, wobei die Entscheidungseinrichtung folgendes Merkmal aufweist:
(d1) eine Mehrzahl von Anforderungsleitungen (20, 21, 22, 23), wobei die Mehrzahl von Anforderungsleitungen mit jedem Agenten in der Mehrzahl von Agenten gekoppelt ist, wobei jeder der Mehrzahl von Agenten einen Zugriff auf den Bus anfordert, indem er ein Signal auf eine Anforderungsleitung aus der Mehrzahl von Anforderungsleitungen plaziert; und
(e) einer Listenhalteeinrichtung (30 - 33, 40 - 43, 66) innerhalb jedem der Mehrzahl von Agenten, die mit der verteilten Listeneinrichtung gekoppelt ist, zum Bewegen eines Agenten zu einem unteren Ende der verteilten Priöritätszugriffsliste, sobald der Agent einen Zugriff auf den Bus erhalten hat;
dadurch gekennzeichnet, daß die Entscheidungseinrichtung ferner folgendes Merkmal aufweist:
(d2) Erteilungsleitungen (2), die von der Mehrzahl von Anforderungsleitungen getrennt sind und mit jedem Agenten der Mehrzahl von Agenten gekoppelt sind, wobei ein Wert auf den Erteilungsleitungen einen Agenten identifiziert, welcher einen Zugriff auf den Bus erhält.

5. Ein Netzsystem gemäß Anspruch 4, bei dem die verteilte Listeneinrichtung in jedem Agenten von der Mehrzahl von Agenten folgendes Merkmal aufweist:
(c1) ein höheres Prioritätsregister (50, 51, 52, 53), wobei das höhere Prioritätsregister ein Bit für jeden Agenten aus der Mehrzahl von Agenten mit Ausnahme eines Agenten, der das höhere Prioritätsregister enthält, aufweist, wobei Bits innerhalb des höheren Prioritätsregisters auf einen ersten logischen Wert für jeden Agenten aus der Mehrzahl von Agenten eingestellt ist, welcher eine Position in der verteilten Prioritätszugriffsliste aufweist, die höher als die des Agenten ist, der das höhere Prioritätsregister enthält, und wobei Bits innerhalb des höheren Prioritätsregisters auf einen zweiten logischen Wert für jeden Agenten aus der Mehrzahl von Agenten eingestellt ist, welcher eine Position in der verteilten Prioritätszugriffsliste aufweist, die niedriger als die des Agenten ist, der das höhere Prioritätsregister aufweist.

6. Ein Netzsystem gemäß Anspruch 5, bei dem die Listenhalteeinrichtung in jedem Agenten aus der Mehrzahl von Agenten folgende Merkmale aufweist:
(e1) eine Einstellungseinrichtung (25, 69), die mit dem höheren Prioritätsregister gekoppelt ist, zum Einstellen aller Bits auf den ersten logischen Wert in dem höheren Prioritätsregister, wenn der Agent, der das höhere Prioritätsregister enthält, einen Zugriff auf den Bus erhält; und
(e2) eine Löscheinrichtung (2, 30, 31, 32, 36, 66, 69), die mit dem höheren Prioritätsregister gekoppelt ist, zum Einstellen eines Bit innerhalb des höheren Prioritätsregisters für einen Agenten, welcher einen Zugriff auf den Bus erhält, wenn der Agent, welcher einen Zugriff auf den Bus erhält, nicht der Agent ist, der das höhere Prioritätsregister enthält, auf einen zweiten logischen Wert.

7. Ein Netzsystem gemäß Anspruch 6, bei dem die Einstellungseinrichtung in jedem Agenten aus der Mehrzahl von Agenten folgendes Merkmal aufweist:
(e1.1) eine Registereinstellungsleitung (25), wobei die Registereinstellungsleitung mit allen Bits in dem höheren Prioritätsregister logisch gekoppelt ist, und die Registereinstellungsleitung innerhalb eines speziellen Agenten zu einer logischen 1 getrieben wird, wenn der spezielle Agent einen Zugriff auf den Bus erhält.

8. Ein Netzsystem gemäß Anspruch 7, bei dem die Löscheinrichtung in jedem Agenten aus der Mehrzahl von Agenten folgende Merkmale aufweist:
(e2.1) eine Mehrzahl von logischen "ODER"-Gattern (40, 41, 42, 43), wobei ein Ausgang jedes logischen "ODER"-Gatters mit einem Bit in dem höheren Prioritätsregister gekoppelt ist, und wobei ein Eingang jedes logischen "ODER"-Gatters mit der Registereinstellungsleitung gekoppelt ist;
(e2.2) eine Mehrzahl von logischen "UND"-Gattern (30, 31, 32, 33), wobei ein Ausgang jedes logischen "UND"-Gatters mit einem logischen "ODER"-Gatter aus der Mehrzahl von logischen "ODER"-Gattern gekoppelt ist, und wobei ein erster Eingang jedes logischen "UND"-Gatters mit einem Bit in dem höheren Prioritätsregister gekoppelt ist; und
(e2.3) eine Decodierungseinrichtung (66), die mit den Erteilungsleitungen (2) und mit einem zweiten Eingang jedes der Mehrzahl von logischen "UND"-Gattern gekoppelt ist, zum Decodieren des Wertes auf der Erteilungsleitungen und zum Treiben einer logischen 0 für einen Agenten, den der Wert auf den Erteilungsleitungen als den Agenten identifiziert, welcher einen Zugriff auf den Bus erhält, auf einen zweiten Eingang eines der Mehrzahl von logischen "UND"-Gattern.

9. Ein Netzsystem gemäß Anspruch 5, bei dem die Entscheidungseinrichtung für jeden Agenten aus der Mehrzahl von Agenten folgende Merkmale aufweist:
(d3) eine Mehrzahl von Zugriffsleitungen, die mit der Mehrzahl von Anforderungsleitungen gekoppelt sind, wobei eine Zugriffsleitung in der Mehrzahl von Zugriffsleitungen zu einer logischen 1 getrieben ist, wenn ein Agent in der Mehrzahl von Agenten auf den Bus zugreifen will;
(d4) eine Mehrzahl von "UND"-Gattern (60, 61, 62, 63, 65), wobei ein "UND"-Gatter für jeden Agenten in der Mehrzahl von Agenten vorhanden ist, wobei jedes "UND"-Gatter aus der Mehrzahl von "UND"-Gattern einen Ausgang, einen ersten Eingang und einen zweiten Eingang aufweist, wobei der erste Eingang mit einer Zugriffsleitung gekoppelt ist, wobei der Ausgang für ein erstes "UND"-Gatter (65) in der Mehrzahl von "UND"-Gattern für einen ersten Agenten, welcher die Entscheidungseinrichtung hält, zu einer logischen 1 getrieben ist, wenn der erste Agent einen Zugriff auf den Bus besitzt, und wobei der zweite Eingang für jeden Agenten in der Mehrzahl von Agenten mit Ausnahme des ersten Agenten mit einem Bit innerhalb des höheren Prioritätsregisters gekoppelt ist; und
(d5) ein "WEDER-NOCH"-Gatter (64) mit einem Ausgang und einer Mehrzahl von Eingängen, wobei der Ausgang des "WEDER-NOCH"-Gatters mit einem zweiten Eingang des ersten "UND"-Gatters gekoppelt ist, und wobei jeder Eingang mit einem Ausgang eines "UND"-Gatters aus der Mehrzahl von "UND"-Gattern mit Ausnahme des ersten "UND"-Gatters gekoppelt ist.

10. Ein Netzsystem gemäß Anspruch 5, bei dem der Wert auf den Erteilungsleitungen codiert ist.

## Revendications

1. Procédé dans un système de calcul pour accès à un bus (1) par une pluralité d'agents (10, 11, 12, 13), le procédé comprenant les étapes consistant à :
(a) maintenir une liste d'accès prioritaire distribuée dans laquelle chaque agent (10, 11, 12, 13) parmi la pluralité d'agents a un registre à priorité plus élevée (50, 51, 52, 53) qui indique le niveau de priorité relatif de l'agent pour obtenir l'accès au bus,
(b) lorsque plus d'un agent parmi la pluralité d'agents demande l'accès au bus, attribuer l'accès au bus à un agent parmi les agents demandant l'accès qui est le plus haut sur la liste d'accès prioritaire distribuée avec la sous-étape consistant à
(b.1) signaler, par chaque agent demandant l'accès au bus, une demande sur une pluralité de lignes de demande (20, 21, 22, 23), la pluralité de lignes de demandes étant couplée avec chacun des agents parmi une pluralité de ceux-ci, et
(c) une fois qu'un agent parmi la pluralité d'agents a le droit d'accéder au bus, modifier chaque registre à priorité plus élevée pour déplacer l'agent qui a le droit d'accéder au bas de la liste d'accès prioritaire distribuée,
caractérisé en ce que lorsque plus d'un agent parmi une pluralité d'agents demande l'accès au bus, l'acceptation de l'accès au bus à un agent parmi les agents demandant l'accès qui est le plus haut sur la liste d'accès prioritaire distribuée comprend en outre les sous-étapes consistant à :
(b.2) signaler sur des lignes d'acceptation (2), par l'agent parmi les agents demandant l'accès qui est le plus haut sur la liste d'accès prioritaire distribuée, l'identité de l'agent parmi les agents demandant l'accès qui est le plus haut sur la liste d'accès prioritaire distribuée, les lignes d'acceptation étant couplées à chaque agent et étant séparées des lignes de demande.

2. Procédé selon la revendication 1, dans lequel dans l'étape (b.2), le signalement sur les lignes d'acceptation est réalisé en plaçant sur les lignes d'acceptation une valeur codée qui représente l'identité de l'agent parmi les agents demandant l'accès qui est le plus haut sur la liste d'accès prioritaire distribuée.

3. Procédé selon la revendication 1, dans lequel l'étape (c) comprend les sous-étapes consistant à :
(c1) fixer à une première valeur logique tous les bits à l'intérieur du registre à priorité plus élevée de l'agent ayant accès au bus ; et
(c2) pour les agents parmi la pluralité d'agents n'ayant pas accès au bus, fixer à une seconde valeur logique un bit à l'intérieur du registre à priorité plus élevée, le bit fixé à la seconde valeur logique correspondant à l'agent qui a eu accès au bus.

4. Système de réseau comprenant :
(a) un bus (1) ;
(b) une pluralité d'agents (10, 11, 12, 13) couplée au bus ;
(c) des moyens de liste distribuée comprenant un registre à priorité plus élevée à l'intérieur de chacun des agents parmi une pluralité de ceux-ci, pour maintenir une liste d'accès prioritaire distribuée dans laquelle chaque agent dans la pluralité d'agents a une position sur la liste d'accès prioritaire distribuée qui indique le niveau de priorité relatif d'accès au bus de chaque agent ;
(d) des moyens d'arbitrage (20 à 67), à l'intérieur de chaque agent, pour, sur au moins un agent parmi la pluralité d'agents demandant l'accès au bus, attribuer l'accès au bus à un agent au moins à partir de l'agent demandant l'accès au bus qui est le plus haut sur la liste d'accès prioritaire distribuée, lesdits moyens d'arbitrage comprenant
(d.1) une pluralité de lignes de demande (20, 21, 22, 23), la pluralité de lignes de demande étant couplée à chaque agent dans la pluralité d'agents, chacun des agents parmi la pluralité d'agents demandant l'accès au bus en plaçant un signal sur une ligne de demande à partir de la pluralité de lignes de demandes, et
(e) des moyens de mise à jour de la liste (30 à 33, 40 à 43, 66), dans chacun des agents d'une pluralité de ceux-ci et couplés aux moyens de liste distribuée, pour déplacer un agent au bas de la liste d'accès prioritaire distribuée une fois que l'agent peut accéder au bus,
caractérisé en ce que les moyens d'arbitrage comprennent en outre :
(d2) des lignes d'acceptation (2), séparées de la pluralité de lignes de demande et couplées à chaque agent de la pluralité d'agents, une valeur sur les lignes d'acception identifiant un agent qui a accès au bus.

5. Système de réseau selon la revendication 4, dans lequel les moyens de liste distribuée comprennent à l'intérieur de chaque agent de la pluralité d'agents :
(c1) un registre à priorité plus élevée (50, 51, 52, 53), le registre à priorité plus élevée comprenant un bit pour chaque agent de la pluralité d'agents à l'exception d'un agent contenant le registre à priorité plus élevée, des bits à l'intérieur du registre à priorité plus élevée étant fixés à une première valeur logique pour chaque agent de la pluralité d'agents qui a une position plus haute sur la liste d'accès prioritaire distribuée que l'agent contenant le registre à priorité plus élevée, et des bits à l'intérieur du registre à priorité plus élevée étant fixés à une seconde valeur logique pour chaque agent de la pluralité d'agents qui a une position plus basse sur la liste d'accès prioritaire distribuée que l'agent contenant le registre à priorité plus élevée.

6. Système de réseau selon la revendication 5, dans lequel les moyens de mise à jour de la liste comprennent à l'intérieur de chaque agent de la pluralité d'agents :
(e1) des moyens de détermination (25, 69), couplés au registre à priorité plus élevée, pour fixer tous les bits à une première valeur logique à l'intérieur du registre à priorité plus élevée sur l'agent contenant le registre à priorité plus élevée ayant accès au bus ; et,
(e2) des moyens d'effacement (2, 30, 31, 32, 33, 66, 69), couplés au registre à priorité plus élevée, pour fixer à une seconde valeur logique un bit à l'intérieur du registre à priorité plus élevée pour un agent qui a accès au bus lorsque l'agent qui a accès au bus n'est pas l'agent contenant le registre à priorité plus élevée.

7. Système de réseau selon la revendication 6, dans lequel les moyens de détermination comprennent à l'intérieur de chaque agent de la pluralité d'agents,
(e1.1) une ligne de détermination de registre (25), la ligne de détermination de registre couplée de manière logique à tous les bits dans le registre à priorité plus élevée, la ligne de détermination de registre à l'intérieur d'un agent particulier étant forcée en 1 logique lorsque l'agent particulier accède au bus.

8. Système de réseau selon la revendication 7, dans lequel les moyens d'effacement comprennent à l'intérieur de chaque agent de la pluralité d'agents :
(e2.1) une pluralité de portes « OU » logiques (40, 41, 42, 43), une sortie de chaque porte « OU » logique étant couplée à un bit dans le registre à priorité plus élevée et une entrée de chaque porte « OU » logique étant couplée à la ligne de détermination de registre ;
(e2.2) une pluralité de portes « ET » logiques (30, 31, 32, 33), une sortie de chaque porte « ET » logique étant couplée à une porte « OU » logique de la pluralité de portes « OU » logiques, et une première entrée de chaque porte « ET » logique couplée à un bit dans le registre à priorité plus élevée ; et,
(e2.3) des moyens de décodage (66) couplés aux lignes d'acceptation (2), et couplés à une seconde entrée de chacune des portes de la pluralité de portes « ET » logiques, pour décoder la valeur sur les lignes d'acceptation et pour forcer sur une seconde entrée d'une porte de la pluralité de portes « ET » logiques un 0 logique pour un agent que la valeur sur les lignes d'acceptation identifie comme l'agent qui a accès au bus.

9. Système de réseau selon la revendication 5, dans lequel les moyens d'arbitrage comprennent pour chaque agent de la pluralité d'agents :
(d3) une pluralité de lignes d'accès, couplée à la pluralité de lignes, une ligne d'accès dans la pluralité de lignes d'accès étant forcée en 1 logique lorsqu'un agent dans la pluralité d'agents souhaite accéder au bus ;
(d4) une pluralité de portes « ET » (60, 61, 62, 63, 65), une porte « ET » pour chaque agent dans la pluralité d'agents, chaque porte « ET » de la pluralité de portes « ET » ayant une sortie, une première entrée et une seconde entrée, la première entrée étant couplée à une ligne d'accès, la sortie pour une première porte « ET » (65) dans la pluralité de portes « ET » pour un premier agent qui contient les moyens d'arbitrage étant forcée en 1 logique lorsque le premier agent a accès au bus, et la seconde entrée pour chaque agent dans la pluralité d'agents à l'exception de premier agent étant couplée à un bit à l'intérieur du registre à priorité plus élevée, et
(d5) une porte « NI » (64), ayant une sortie et une pluralité d'entrées, la sortie de la porte « NI» étant couplée à une seconde entrée de la première porte « ET », et chaque entrée étant couplée à une sortie d'une porte « ET » de la pluralité de portes « ET » à l'exception de la première porte « ET ».

10. Système de réseau selon la revendication 5, dans lequel la valeur sur les lignes d'acceptation est codée.
